# EUROPÄISCHE PATENTANMELDUNG

(11) **EP 0 780 620 A1**
(43) Veröffentlichungstag der Anmeldung: **25.06.1997**
(21) Anmeldenummer: 96120344.5
(22) Anmeldetag: 18.12.1996
(51) Int. Cl.: F16L 47/02, F16L 9/16

(54) **Rohr oder dgl. Formstück mit Elektromuffe, Verfahren zur Herstellung der Elektromuffe und Verfahren zur Herstellung einer Verbindung derartiger Rohre oder dgl. Formstücke**

(30) Priorität: 19.12.1995 DE 19547507
(71) Anmelder: Karl-Heinz Krah GmbH Werkzeug- und Vorrichtungsbau, 57520 Schutzbach (DE)
(72) Erfinder: Krah, Karl-Heinz, 57567 Daaden-Biersdorf (DE); Frank, Philipp, 64546 Mörfelden (DE)
(74) Vertreter: KEIL & SCHAAFHAUSEN Patentanwälte

(57) **Zusammenfassung**

Es wird ein Rohr oder dgl. Formstück (1, 10) aus einem thermoplastischen Kunststoff beschrieben, das ein Muffenende (3) und ein Einsteckende (4) zur Verbindung derartiger Rohre oder dgl. Formstücke aufweist. Um eine einfache und sichere Verbindung zwischen zwei Rohren oder dgl. Formstücke (1, 10) herzustellen, ist mit der Erfindung vorgesehen, daß im inneren Randbereich (6) des Rohres oder dgl. Formstück ein Heizdraht (5) in dem Muffenende (3) angeordnet ist.

## Beschreibung

Die Erfindung betrifft ein Rohr oder dgl. Formstück aus thermoplastischem Kunststoff, insbesondere aus schraubenlinienförmig gewickeltem Bandmaterial ("Wickelrohr"), mit einem Muffenende und einem Einsteckende, wobei der Innendurchmesser des Muffenendes etwas größer ist als der Außendurchmesser des Einsteckendes, damit das Einsteckende eines Rohres oder dgl. in das Muffenende eines anderen Rohres oder dgl. passungsmäßig einsteckbar ist, und wobei in dem Muffenende ein Heizdraht vorgesehen ist, und ein Verfahren zur Herstellung des Muffenendes eines Rohres oder dgl. Formstück, insbesondere Wickelrohr, bei dem das Rohr oder dgl. aus schraubenlinienförmig gewickeltem Bandmaterial aus thermoplastischem Kunststoff besteht und wobei das Bandmaterial auf eine Wickeltrommel aufgewickelt und durch die Wärme im Bereich der Wickelnaht verschmolzen wird, sowie ein Verfahren zur Herstellung einer Verbindung zwischen Rohren oder dgl. Formstück aus thermoplastischem Kunststoff, insbesondere von Wickelrohren.

Rohre oder dgl. Formstück wie zylindrische Körper sind für vielfältige Anwendungen bereits seit langem bekannt (DE 14 50 348 A1, DE 20 14 648 A1, DE 22 02 475 B2, DE 39 38 675 C2, DE 87 17 759 U1). Derartige Rohre aus thermoplastischen Kunststoffen werden auch mit profilierten Wandungen und glatten Rohrinnenflächen hergestellt. Sowohl diese Rohre als auch aus diesen Rohren hergestellte Formstücke werden aufgrund ihrer Eigensteifigkeit u.a. für frei verlegte und erdverlegte Rohrleitungen verwendet (DIN 16 961).

Um derartige Rohre so miteinander verbinden zu können, daß sie zwischen Muffenende und Einsteckende einwandfrei abdichten, werden in den Muffen der bekannten Rohre Dichtungsringe eingesetzt. Da das Einsetzen der Dichtungsringe nach der Herstellung der Muffenrohre arbeitsaufwendig ist und die mechanische oder adhäsive Verbindung häufig nicht den auftretenden Beanspruchungen genügt, wird in der DE 28 24 968 A1 vorgeschlagen, im Zuge der Rohrherstellung ein oder mehrere Dichtungsringe in die Innenwandung des Muffenendes einzubetten.

Bei großen Schwankungen der Temperatur der Umgebung und/oder des in der Leitung befindlichen Mediums kann es infolge des relativ großen Ausdehnungskoeffizienten der verwendeten Kunststoffe vorkommen, daß das Rohrende nach einer gewissen Zeit über die Dichtung hinaus aus der Muffe gezogen wird, so daß die Leitung rinnt.

Es sind daher bereits sogenannte Schweißmuffen bekannt, bei denen auf der Innenseite der Muffe eine Heizdrahtwendel in einer Ausnehmung der Muffe eingebettet ist. Wird nach dem Einstecken der Enden zweier zu verbindender Rohre in die Muffe ein Heizstrom duch die Wendel geschickt, so werden die Rohrenden mit der Muffe verschweißt. Da die Herstellung separater Muffen mit eingebetteten Heizdrahtwendeln recht teuer ist, da enge Toleranzen eingehalten werden müssen, wenn nicht nur eine mechanisch feste, sondern auch eine absolut leckfreie Verbindung gewährleistet werden soll, ist in der CH 504 642 bereits vorgeschlagen worden, die Muffe an einem Ende eines Kunststoffrohres auszubilden, wobei ihr Innendurchmesser etwas größer ist als der Außendurchmesser des anzuschließenden Rohres, das normalerweise den gleichen Querschnitt wie das Rohr aufweist, an dem die Muffe ausgebildet ist. Der Endteil der Muffe weist dabei einen etwas größeren Innendurchmesser auf als der übrige Teil der Muffe, um einen Heizdraht aufzunehmen, der in einem radialen Schlitz in dem ringfömigen Endteil eingelegt ist. Als besonders billige Lösung wird vorgeschlagen, den Draht direkt auf das eine Rohr zu wickeln, bevor man dasselbe in die Muffe hineinsteckt. Um die Rohrverbindung herzustellen, wird dann der Heizdraht unter Strom gesetzt, wodurch sich die Umgebung des Drahtes bis zum plastischen Zustand erwärmt. Diese Wärme erzeugt eine Ausdehnung des Rohrmaterials in Richtung Rohrinnendurchmesser, wodurch eine Herstelltoleranz zwischen Muffe und Rohr ausgeglichen und zusätzlich ein Schweißdruck erzeugt wird. Dadurch wird die Muffe mit dem Rohr verbunden.

Sowohl die aus der CH 504 642 bekannte Elektromuffe, als auch die separaten Elektromuffen haben den Nachteil, daß sie umständlich zu handhaben sind und außerdem die Gefahr besteht, daß die Heizdrähte aufgrund äußerer Einflüsse beschädigt werden. Da die Rohre häufig im Erdreich verlegt werden, gelangt leicht Dreck zwischen die Heizdrähte, so daß nur eine schlechte Verbindung entsteht.

Aufgabe der vorliegenden Erfindung ist es daher, ein Rohr oder dgl. Formstück der eingangs genannten Art zu schaffen, mit dem eine einfache und sichere Verbindung zweier Rohre oder dgl. Formstücke ermöglicht wird, sowie Verfahren zur Herstellung der Muffenenden entsprechender Wickelrohre oder dgl. und zur Herstellung einer Verbindung zwischen derartigen Rohren oder dgl. Formstücke zur Verfügung zu stellen.

Diese Aufgabe wird hinsichtlich des Rohres oder dgl. Formstück dadurch gelöst, daß der Heizdraht in dem Muffenende im inneren Randbereich des Rohres oder dgl. Formstück angeordnet ist. Damit ist der Heizdraht an der vorbestimmten Stelle in der Rohrwand geschützt eingebettet, so daß man sich beim Zussammenfügen zweier Rohre oder dgl. Formstücke nicht um den Heizdraht zu kümmern braucht und dieser auch nicht beschädigt werden oder sich mit Sand oder dgl. zusetzen kann. Somit ist eine saubere und sichere Verbindung gewährleistet.

Insbesondere bei großen Rohrdurchmessern hat es sich als besonders vorteilhaft erwiesen, wenn der Heizdraht erfindungsgemäß als Schweißwendel ausgebildet ist. Diese läßt sich in Weiterbildung dieses Erfindungsgedankens zweckmäßigerweise durch Verschweißen in dem Muffenende befestigen. Damit ist sie sicher in dem Rohr vor einer Beschädigung geschützt.

Gemäß einer bevorzugten Ausgestaltung der Erfindung weist die Schweißwendel eine Mäanderform auf. Damit wird eine besonders große und zugleich sichere Schweißverbindung ermöglicht. In Weiterbildung dieses Erfindungsgedankens entspricht die Breite der Schweißwendel etwa der Schweißzonenbreite. Die Schweißwendel ist vorzugsweise aus einem Messingdraht endlos gefertigt.

Gemäß einer weiteren Ausgestaltung der Erfindung ist der Heizdraht ein bereits mit thermoplastischem Material ummantelter Metalldraht.

Eine besonders einfache Stromverbindung des Heizdrahtes wird mit der Erfindng dadurch ermöglicht, daß die Elektroanschlüsse des Heizdrahtes nach außen aus dem Muffenende herausgeführt sind.

Ein Verfahren zur Herstellung des Muffenendes eines Rohres oder dgl. Formstück, das aus schraubenlinienförmig gewickeltem Bandmaterial aus thermoplastischem Kunststoff besteht, wobei das Bandmaterial auf eine Wickeltrommel aufgewickelt und durch die Wärme im Bereich der Wickelnaht verschmolzen wird, sieht nach der Erfindung vor, daß zunächst der Heizdraht insbesondere spiralförmig auf die Wickeltrommel gewickelt wird und daß danach das Bandmaterial des Rohres oder dgl. Formstück auf die Wickeltrommel aufgebracht wird. Damit ist der Heizdraht in dem Wandabschnitt des Muffenendes sicher eingebettet, die dem Einsteckende des zu verbindenden Rohres oder dgl. Formstück gegenüberliegt. So läßt sich die Verbindung der beiden Rohre oder dgl. Formstücke mit einer einzigen Schweißverbindung sicher herstellen.

Es kann sich als zweckmäßig erweisen, das Verfahren erfindungsgemäß dahingehend zu modifizieren, daß zunächst eine dünne Schicht Rohrmaterial auf die Wickeltrommel aufgebracht wird, und daß erst dann der Heizdraht und danach das übrige Bandmaterial des Rohres oder dgl. Formstück auf die Wickeltrommel gewickelt wird.

Ein weiteres erfindungsgemäßes Verfahren zur Herstellung des Muffenendes eines Rohres oder dgl. Formstück, insbesondere Wickelrohr, bei dem das Rohr oder dgl. Formstück aus schraubenlinienförmig gewickeltem Bandmaterial aus thermoplastischem Kunststoff besteht und wobei das Bandmaterial auf eine Wickeltrommel aufgewickelt und durch die Wärme im Bereich der Wickelnaht verschmolzen wird, sieht vor, daß der als Schweißwendel ausgebildete Heizdraht zunächst in das Muffenende eingelegt und dort befestigt wird und danach durch kurzzeitiges Erhitzen des Heizdrahtes mit dem Muffenende verschweißt wird.

Die nach dem Einfügen des Einsteckendes des einen Rohres in das Muffenende des anderen Rohres durch das Erhitzen des Heizdrahtes erzeugte Wärme verursacht eine Ausdehnung des thermoplastischen Kunststoffes in Richtung des Rohrinnendurchmessers, wodurch die beiden Rohre miteinander verbunden werden. Durch die Ausdehnung des thermoplastischen Kunststoffes werden dabei die Herstelltoleranz zwischen Muffe und zu verbindendem Rohr oder dgl. Formstück ausgeglichen und außerdem ein Schweißdruck erzeugt. Um schon am Beginn des Schweißvorganges einen guten Kontakt zwischen Spitzende und Elektromuffe zu erreichen, sieht die Erfindung vor, an der Verbindungsstelle der beiden Rohre oder dgl. Formstücke eine Blase aus einem elastischen Werkstoff in der Rohrleitung zu positionieren und mit Luft aufzupumpen. Damit wird ein zusätzlicher radialer Druck im Bereich der Schweißstelle erzeugt und außerdem werden bereits im kalten Zustand Fertigungstoleranzen in Form eines Schlitzes zwischen dem Spitzende und der Elektromuffe eliminiert. So wird ein besonders guter Kontakt an der Schweißstelle hergestellt, was zu einer einwandfreien Verbindung der beiden Rohre oder dgl. Formstücke führt.

Weitere Merkmale, Vorteile und Anwendungsmöglichkeiten der Erfindung ergeben sich aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: einen Halbschnitt duch ein erfindungsgemäßes Wickelrohr aus thermoplastischem Kunststoff,
- Fig. 2: in einer vergrößerten Darstellung einen Schnitt durch das als Elektromuffe ausgebildete eine Ende des Wickelrohres,
- Fig. 3: einen Schnitt durch die Elektromuffe gemäß Fig. 2 mit dem eingeschobenen Spitzende eines weiteren Wickelrohres,
- Fig. 4: einen Schnitt durch eine Rohrverbindung mit einer eingesetzten Blase aus elastichem Werkstoff zum Verbessern des Schweißvorganges,
- Fig. 5: in einer schematischen Darstellung eine Ansicht auf des Muffenende eines Wickelrohres mit einer eingesetzten Schweißwendel gemäß einer weiteren Ausführungsform der Erfindung und
- Fig. 6: einen Teilschnitt durch das Muffenende gemäß Fig. 5 mit der mäanderförmigen Schweißwendel.

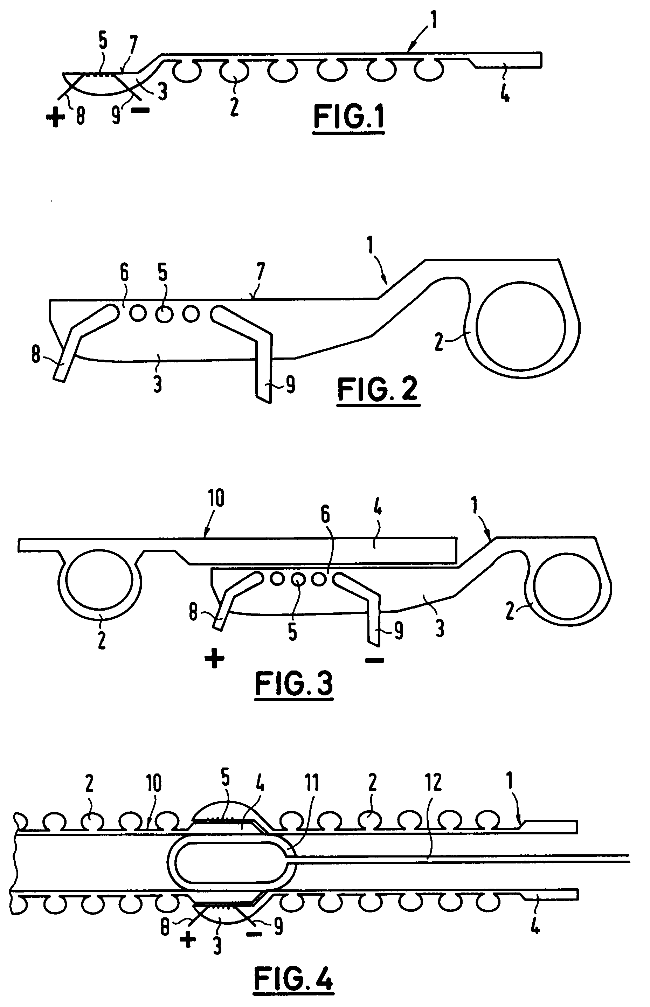

Das in Fig. 1 in einem Halbschnitt gezeigte Wickelrohr 1 besteht aus einem schraubenlinienförmig gewickelten Bandmaterial aus thermoplastischem Kunststoff, das zur Herstellung des Wickelrohres auf eine Wickeltrommel aufgewickelt worden ist und durch die Wärme im Bereich der Wickelnaht verschweißt wurde. In dem gezeigten Ausführungsbeispiel weist das Wickelrohr 1 als zusätzliche Längsverstärkung ein hohles Verstärkungsprofil 2 auf. Das eine Ende des Wickelrohres 1 ist als Muffenende 3 und das andere als Einsteck- oder Spitzende 4 ausgebildet.

Der Innendurchmesser des Muffenendes 3 ist etwas größer als der Außendurchmesser des Einsteckendes 4, damit das Einsteckende 4 eines Rohres oder dgl. Formstück in das Muffenende 3 eines anderen Rohres oder dgl. Formstück passungsmäßig einsteckbar ist. In dem Muffenende 4 ist ein Heizdraht 5 eingelassen.

Wie insbesondere aus Fig. 2 zu ersehen ist, ist der Heizdraht 5 in dem Muffenende 3 im inneren Randbereich 6 nahe der Innenwand 7 des Wickelrohres 1 angeordnet. Die Elektroanschlüsse 8 und 9 des Heizdrahtes 5 sind nach außen aus dem Muffenende 3 herausgeführt, wo sie entweder direkt oder über ein Verbindungselement, z.B. eine Schraube oder Klemme, mit einer nicht dargestellten Stromquelle verbunden werden.

Um den Heizdraht 5 in der oben beschriebenen Weise in dem Muffenende 3 des Wickelrohres 2 anzuordnen, wird bei der Herstellung des Wickelrohres oder dgl. Formstück zunächst der Heizdraht 5 auf eine nicht dargestellte Wickeltrommel gewickelt. Danach wird das Bandmaterial in an sich bekannter Weise auf die Wickeltrommel aufgebracht. Dies geschieht derart, daß ein aus thermoplastischem Kunststoff bestehendes Bandmaterial in bis zur Verformungsfähigkeit erwärmtem Zustand schraubenlinienförmig auf die Wickeltrommel aufgebracht wird. Durch die Wärme wird das Bandmaterial im Bereich der Wickelnaht verschmolzen. Im Bereich des Muffenendes 3 umschließt das aufgebrachte warme Bandmaterial den zuvor auf die Wickeltrommel gewickelten Heizdraht 5, so daß dieser in dem Rohrmaterial eingebettet ist. Die als Elektroanschlüsse 8 und 9 dienenden freien Enden des Heizdrahtes 5 werden nach außen aus der Elekromuffe 3 herausgeführt. Dies kann auch mittels eines Verbindungselementes wie z.B. einer Schraube oder Klemme erfolgen.

Die Ausgestaltung der Wickelrohre richtet sich nach deren Verwendungszweck. So kann es geraten erscheinen, den Heizdraht 5 nicht unmittelbar auf die Wickeltrommel zu wickeln, sondern zunächst eine dünne Schicht Rohrmaterial aufzubringen und erst darauf den Heizdraht und danach das komplette Rohr oder dgl. Formstück zu wickeln.

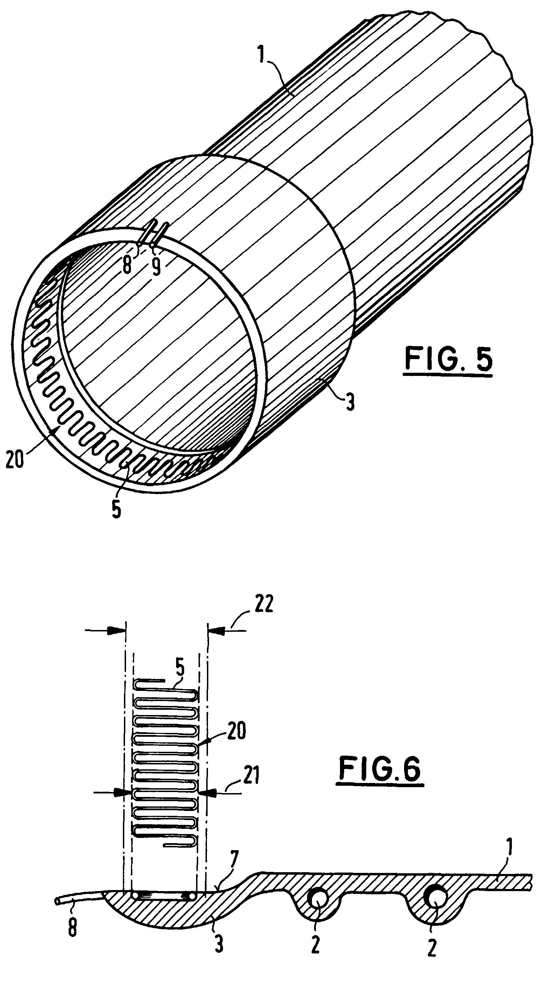

In den Fig. 5 und 6 ist eine weitere Ausführungsform einer erfindungsgemäßen Heizwendel dargestellt. Diese besteht aus einer mäanderförmigen Schweißwendel 20, die in dem Muffenende 3 des Rohres oder dgl. Formstücks 1 befestigt und mit dem Muffenende 3 verschweißt ist. Dieses erfolgt in einfacher Weise dadurch, daß die aus einem Messingdraht endlos gefertigte Schweißwendel 20 an der Innenseite des Muffenendes 3 des ansonsten bereits fertigen Rohres 1 vorläufig, z.B. durch Tackern, befestigt wird. Danach wird der Heizdraht 5 der Schweißwendel 20 kurzzeitig unter Strom gesetzt, so daß die Umgebung der Schweißwendel 20 zu schmelzen beginnt. Nun läßt sich die Schweißwendel 20 leicht durch eine geeignete Vorrichtung etwas in die Wandung des Muffenendes 3 des Rohres oder dgl. Formstücks 1 eindrücken. Nach Abkühlen des Rohrmaterials ist die Schweißwendel 20 sicher in dem Muffenende 3 befestigt.

Die Breite 21 der mäanderförmigen Schweißwendel 20 ist dabei so dimensioniert, daß die Schweißwendel annähernd die gesamte Schweißzone 22 der zu verbindenden Rohre oder dgl. Formstücke 1 und 10 erfaßt. Damit läßt sich eine besonders feste und sichere Verbindung herstellen.

Werden die Wickelrohre 1, 10 als frei verlegte und erdverlegte Rohrleitungen verwendet, weisen sie nach DIN 16 961 eine profilierte Wandung auf. Eine solche ist in Form des Verstärkungsprofils 2 in den Figuren dargestellt. Es können aber auch Wickelrohre mit glatten Wandungen mittels Elektromuffen verbunden werden, wie sie mit der vorliegenden Erfindung zur Verfügung gestellt werden.

Das dem Muffenende 3 gegenüberliegende Spitzende 4 des Wickelrohres 1 ist als Einsteckende ausgeführt. Damit dieses passungsmäßig in das Muffenende 3 eines anderen Wickelrohres eingesteckt werden kann, ist der Innendurchmesser des Muffenendes 3 etwas größer als der Außendurchmesser des Einsteckendes 4. Die Verbindung von Muffenende 3 und Einsteckende 4 ist in Fig. 3 gezeigt.

Sollen zwei Rohre 1 und 10 miteinander verbunden werden, so wird das Einsteckende 4 des einen Rohres 10 in das Muffenende 3 des anderen Rohres 1 eingeschoben. Da die beiden Rohre 1 und 10 identisch aufgebaut sind und damit einen gleichen Innenwie Außendurchmesser aufweisen, ist der Innendurchmesser des Muffenendes 3 etwas größer als der Außendurchmesser des Einsteckendes 4. Ist nun das Einsteckende 4 des Rohres 10 in das Muffenende 3 des Rohres 1 passförmig eingeschoben, wird der Heizdraht 5 über seine Elektroanschlüsse 8 und 9 an eine Stromquelle angeschlossen. Dadurch erwärmt sich der thermoplastische Kunststoff im Bereich des Heizdrahtes 5 und dehnt sich in Richtung zum Rohrinnendurchmesser aus, womit die Herstellungstoleranzen zwischen dem Muffenende 3 und dem Einsteckende 4 ausgeglichen werden und zusätzlich ein Schweißdruck erzeugt wird. Dadurch wird das Muffenende 3 des einen Rohres 1 mit dem Einsteckende 4 des anderen Rohres 10 verbunden.

Um bereits zu Beginn des Schweißvorganges einen guten Kontakt zwischen dem Spitzende 4 und der Elektromuffe 3 zu erreichen, wird unter die Verbindungsstelle der beiden Rohre 1 und 10 zusätzlich eine Blase 11 aus einem elastischen Werkstoff positioniert und danach mit Luft aufgepumpt. Hierzu kann die Blase 11 über eine Leitung 12 an einen nicht dargestellten Kompressor angeschlossen sein. Ist die Blase 11 entsprechend aufgepumpt, wird im Bereich der Schweißstelle ein zusätzlicher radialer Druck erzeugt, wodurch bereits im kalten Zustand Fertigungstoleranzen weitgehend eliminiert werden. Erst danach wird der Heizdraht 5 solange erhitzt, bis die Umgebung des Heizdrahtes sich bis zum plastischen Zustand erwärmt hat. In diesem Zustand verbinden sich die Rohrenden. Danach wird die Luft aus der Blase 11 abgelassen und die Blase in dem Rohr 1 (in der Fig. 4) nach rechts entweder aus dem Rohr herausgezogen oder bis zu einer nächsten Verbindungsstelle weitergezogen. Die so erzeugte Schweißstelle erfüllt auch härteste Anforderungen bei einem geringstmöglichen Aufwand.

## Patentansprüche

1. Rohr oder dgl. Formstück aus thermoplastischem Kunststoff, insbesondere aus schraubenlinienförmig gewickeltem Bandmaterial ("Wickelrohr"), mit einem Muffenende und einem Einsteckende, wobei der Innendurchmesser des Muffenendes etwas größer ist als der Außendurchmesser des Einsteckendes, damit das Einsteckende eines Rohres oder dgl. Formstück in das Muffenende eines anderen Rohres oder dgl. Formstück passförmig einsteckbar ist, und wobei in dem Muffenende ein Heizdraht vorgesehen ist, **dadurch gekennzeichnet**, daß der Heizdraht (5) in dem Muffenende (3) im inneren Randbereich (6) des Rohres oder dgl. Formstück (1, 10) angeordnet ist.

2. Rohr oder dgl. Formstück nach Anspruch 1, **dadurch gekennzeichnet**, daß der Heizdraht (5) als Schweißwendel ()ausgebildet ist.

3. Rohr oder dgl. Formstück nach Anspruch 2, **dadurch gekennzeichnet**, daß die Schweißwendel () in dem Muffenende (3) durch Verschweißen befestigt ist.

4. Rohr oder dgl. Formstück nach einem der Ansprüche 1 bis 3, **dadurch gekennzeichnet**, daß die Schweißwendel () eine Mäanderform aufweist.

5. Rohr oder dgl. Formstück nach einem der Ansprüche 1 bis 4, **dadurch gekennzeichnet**, daß die Breite der Schweißwendel () etwa der Schweißzonenbreite entspricht.

6. Rohr oder dgl. Formstück nach einem der Ansprüche 1 bis 5, **dadurch gekennzeichnet**, daß der Heizdraht (5) ein bereits mit thermoplastischem Material ummantelter Metalldraht ist.

7. Rohr oder dgl. Formstück nach einem der vorhergehenden Ansprüche, **dadurch gekennzeichnet**, daß die Elektroanschlüsse (8, 9) des Heizdrahtes (5) nach außen aus dem Muffenende (3) herausgeführt sind.

8. Verfahren zur Herstellung des Muffenendes eines Rohres oder dgl. Formstück, insbesondere Wickelrohr, bei dem das Rohr oder dgl. Formstück aus schraubenlinienförmig gewickeltem Bandmaterial aus thermoplastischem Kunststoff besteht, insbesondere nach Anspruch 1, und wobei das Bandmaterial auf eine Wickeltrommel aufgewickelt und durch die Wärme im Bereich der Wickelnaht verschmolzen wird, **dadurch gekennzeichnet**, daß zunächst der Heizdraht insbesondere spiralförmig auf die Wickeltrommel gewickelt wird und daR danach das Bandmaterial des Rohres oder dgl. Formstück auf die Wickeltrommel aufgebracht wird.

9. Verfahren zur Herstellung des Muffenendes eines Rohres oder dgl. Formstück nach Anspruch 7, **dadurch gekennzeichnet**, daß zunächst eine dünne Schicht Rohrmaterial auf die Wickeltrommel aufgebracht wird, daß dann der Heizdraht und danach das übrige Bandmaterial des Rohres oder dgl. Formstück gewickelt wird.

10. Verfahren zur Herstellung des Muffenendes eines Rohres oder dgl. Formstück, insbesondere Wickelrohr, bei dem das Rohr oder dgl. Formstück aus schraubenlinienförmig gewickeltem Bandmaterial aus thermoplastischem Kunststoff besteht, insbesondere nach einem der Ansprüche 2 bis 5, und wobei das Bandmaterial auf eine Wickeltrommel aufgewickelt und durch die Wärme im Bereich der Wickelnaht verschmolzen wird, **dadurch gekennzeichnet**, daß der als Schweißwendel ausgebildete Heizdraht zunächst in das Muffenende eingelegt und dort befestigt wird und danach durch kurzzeitiges Erhitzen des Heizdrahtes mit dem Muffenende verschweißt wird.

11. Verfahren zur Herstellung einer Verbindung zwischen Rohren oder dgl. Formstücke aus thermoplastischem Kunststoff, insbesondere von Wickelrohren nach einem der vorhergehenden Ansprüche, **dadurch gekennzeichnet**, daß das Spitzende bzw. Einsteckende (4) eines Rohres (10) in das als Elektromuffe ausgebildete Muffenende (3) eines anderen Rohres (1) eingeschoben wird, daß unter die Verbindungsstelle der beiden Rohre (1, 10) eine Blase (11) aus elastischem Werkstoff positioniert und aufgepumpt wird, daß der im inneren Randbereich (6) des Muffenendes (3) angeordnete Heizdraht (5) durch Anlegen von Strom an seinen Elektroanschlüssen (8, 9) derart erhitzt wird, daß die Umgebung des Heizdrahtes (5) bis zum plastischen Zustand erwärmt wird und sich die Enden der Rohre (1, 10) verbinden, daß die Luft aus der Blase (11) abgelassen und die Blase (11) aus dem Rohr (1) gezogen, bzw. zur nächsten Verbindungsstelle weitergezogen wird.
